# EUROPEAN PATENT SPECIFICATION

(11) **EP 1 672 361 B1**
(45) Date of publication and mention of the grant of the patent: **01.06.2016**
(21) Application number: 04773156.7
(22) Date of filing: 09.09.2004
(51) Int. Cl.: G01N 23/207, G21K 7/00

(54) **X-RAY DIFFRACTION MICROSCOPE AND X-RAY DIFFRACTION MEASUREMENT METHOD USING X-RAY DIFFRACTION MICROSCOPE**
RÖNTGENDIFFRAKTIONSMIKROSKOP SOWIE RÖNTGENDIFFRAKTIONSMESSVERFAHREN UNTER VERWENDUNG DES RÖNTGENDIFFRAKTIONSMIKROSKOPS
MICROSCOPE DE DIFFRACTION RADIOLOGIQUE ET MESURE DE DIFFRACTION RADIOLOGIQUE UTILISANT LE MICROSCOPE DE DIFFRACTION RADIOLOGIQUE

(30) Priority: 10.09.2003 JP 2003318922
(43) Date of publication of application: 21.06.2006
(73) Proprietor: National Institute for Materials Science, Tsukuba-shi, Ibaraki 305-0047 (JP)
(72) Inventor: SAKURAI, Kenji, Tsukuba-shi, Ibaraki 305-0047 (JP); MIZUSAWA, Tazuko, Tsukuba-shi, Ibaraki 305-0047 (JP)
(74) Representative: Calamita, Roberto
(86) International application number: PCT/JP2004/013497
(87) International publication number: WO 2005/026708

(56) References cited:
- JP-A- 4 301 800
- JP-A- 62 106 352
- JP-A- 2000 055 842
- JP-A- 2000 292 379
- JP-A- 2001 281 174
- US-A- 4 419 585
- CHIKAURA Y. ET AL.: 'Polycrystal scattering topography' JOURNAL OF APPLIED CRYSTALLOGRAPHY vol. 15, no. 1, 01 February 1982, pages 48 - 54, XP000886944

## Description

### Technical Field

This invention relates to an X-ray diffraction microscope apparatus and an X-ray diffraction measuring method with the X-ray diffraction microscope apparatus. More particularly, this invention relates to an X-ray diffraction microscope apparatus which can acquire an image in an extremely short time, and can image a difference of an inhomogeneous sample, a material in which different crystal structures exist in one sample or a sample in which textures having different orientations are contained, and an X-ray diffraction measuring method with the X-ray diffraction microscope apparatus.

### Background Art

The X-ray diffraction measuring method is a technique of obtaining a diffraction pattern of X-rays in correspondence to a spacing of lattice planes of a crystalline sample on the basis of a diffraction and scattering of the X-rays by inputting the X-rays to the crystalline sample. It can obtain the diffraction pattern by mounting the sample and a detector on a biaxial goniometer, inputting the monochromatic X-rays to the crystalline sample and performing an angle scanning. In order to perform the imaging, there can be considered, for example, a method of making a beam size of the incident X-rays small and XY scanning the sample for each of the points for the angle scanning (non-patent document 1: Y. Chikaura, Y. Yoneda and G. Hilderbrandt, "Polycrystal scattering topography", Journal of Applied Crystallography, vol. 15, p. 48-54,1982).

An X-ray diffraction apparatus for performing an analysis of a micro portion on the sample has been placed on the market, and it has been considered that the acquirement itself of the image as mentioned above can be achieved by combining the X-ray diffraction apparatus for performing the analysis of the micro portion and the XY scanning of the sample. However, there is a problem in that an enormous amount of time is required for the measurement.

In other words, if the time required for acquiring the diffraction pattern corresponding to one point on the sample is about twenty to thirty minutes, which is equal to the time of a standard diffraction experiment, it takes about 5000 hours, that is, about 200 days to measure in the case where the number of points is 10000, obtained by the formula of 100x100. Accordingly, it has been strongly desired to shorten the measuring time. However, it has been considered to be unavoidable that it takes about a whole day to one week to measure even if various devices are applied to the conventional measuring method to try to shorten the measuring time.

On the other hand, a powder X-ray diffraction method particularly corresponds to a method of examining the structure and texture of a crystal on the basis of an X-ray diffraction pattern of a powdery crystal, and corresponds to a simple crystal structure analyzing method which has been widely used in the world. However, in most cases in the powder X-ray diffraction method, a measuring object is constituted only by a sample having homogeneity and random orientation, and it is very difficult to analyze and image a structure of a localized crystal in the case of an inhomogeneous sample, a material in which different crystalline structures exist in one sample or a sample in which textures having different orientations are contained.

Accordingly, this invention has been made by taking the above into consideration. An object of the invention is to provide an X-ray diffraction microscope apparatus which can solve the problems in the prior art, can acquire an image in an extremely short time, and can image a difference of an inhomogeneous sample, a material in which different crystal structures exist in one sample or a sample in which textures having different orientation contained, and an X-ray diffraction measuring method by the X-ray diffraction microscope apparatus.

### Summary of the Invention

In order to achieve the object mentioned above, in accordance with a first aspect of this invention, there is provided an X-ray diffraction microscope apparatus for measuring and imaging diffraction X-rays generated at a specific position on a sample when irradiating incident X-rays to the sample. It comprises an X-ray generating apparatus operable to generate incident X-rays, a sample stage on which the sample is placed, a two-dimensional X-ray detector having an energy resolving power operable to detect diffracted X-rays from the sample, a collimator comprising a capillary plate, operable to suppress angle divergence of the diffracted X-rays from the sample, an image processing apparatus operable to perform image processing of signals detected by the two-dimensional X-ray detector to acquire a microscope image, and an image recording and displaying apparatus for recording and displaying the microscope image acquired by said image processing apparatus. The angle divergence of diffracted X-rays is suppressed by positioning the sample and the two-dimensional X-ray detector as close as possible via the collimator, and the diffracted X-rays are measured and imaged in a state in which the two-dimensional X-ray detector and the sample stage are at a standstill without being moved.

Preferably, continuous X-rays are used as the incident X-rays.

Preferably, the X-ray generating apparatus employs an apparatus for generating continuous X-rays which do not include a high energy component equal to or higher than 13 keV.

Preferably, a high energy component removing optical system for removing a high energy component equal to or higher than 13 keV in the incident X-rays is arranged in a side of the X-ray generating

apparatus rather than at an incident position of the incident X-rays to the sample. Preferably, the collimator is attached to the two-dimensional X-ray detector.

Preferably, the two-dimensional X-ray detector employs any of a CCD camera and a CMOS image sensor. The CCD camera and CMOS image sensors will have X-ray detecting capacity.

Preferably, an image corresponding to a specific spacing of lattice planes of the sample is acquired by determining the energy of the diffracted X-rays on the basis of the electric charge amount generated in the CCD camera or the CMOS image sensor.

In accordance with a second aspect of this invention, there is provided an X-ray diffraction measuring method using an X-ray diffraction microscope apparatus for measuring and imaging diffraction X-rays generated at a specific position on a sample when irradiating incident X-rays to the sample. The method uses the X-ray diffraction microscope apparatus comprising an X-ray generating apparatus operable to generate the incident X-rays, a sample stage on which the sample is placed, a two-dimensional X-ray detector having energy resolving power operable to detect diffracted X-rays from the sample, a collimator comprising a capillary plate, operable to suppress angle divergence of the diffracted X-rays, an image processing apparatus operable to perform image processing of the signals detected by said two-dimensional X-ray detector to acquire a microscope image, and an image recording and displaying apparatus for recording and displaying the microscope image acquired by said image processor. The angle divergence of diffracted X-rays from the sample is suppressed by positioning the sample and the two-dimensional X-ray detector as close as possible via the collimator. The diffracted X-rays are measured and imaged in a state in which the two-dimensional X-ray detector and the sample stage are at a standstill without being moved.

### Brief Description of the Drawings

Fig. 1 is a front-side perspective view exemplifying one embodiment of an X-ray diffraction microscope apparatus in accordance with this invention;
Figs. 2(a) and (b) are photographs showing a result obtained by observing a powder diffraction spot from a molybdenum plate by using the X-ray diffraction microscope apparatus in accordance with this invention;
Fig. 3(a) is a photograph showing a result imaged by using all scattered and fluorescent X-rays;
Fig. 3(b) is a photograph showing a result of analysis of the diffracted X-rays corresponding to 4.7 keV; and
Fig. 3(c) is a photograph showing a result of analysis of the diffracted X-rays corresponding to 5.4 keV.

In this case, reference numerals in the drawings denote the following elements.
1 X-ray diffraction microscope apparatus
2 X-ray generating apparatus
3 sample stage
4 collimator
5 two-dimensional X-ray detector
6 computer
7 sample
8 X-rays

### Detailed Description of the Preferred Embodiment

This invention has the features as mentioned above, however, a description will be given below of an embodiment thereof.

The inventors of this application have proposed an invention relating to imaging of fluorescent X-rays (Japanese Patent Application Laid-Open No. 10-229180 and Japanese Patent Application Laid-Open No. 2002-138834). However, the fluorescent X-rays correspond to specific X-rays of elements contained in the measuring object discharge, and give information relating to the chemical composition of the measuring object. On the other hand, this invention does not relate to the fluorescent X-rays which are sensitive to the chemical composition of the sample, have a specific energy and are radiated in all directions in an isotropic manner. This invention relates to diffracted X-rays which are generated by an absolutely different principle and mechanism from those of the fluorescent X-rays, basically have an approximately equal energy to that of the incident X-rays, and have an angle distribution scattered only in a predetermine angle direction peculiar to a spacing of crystal lattice planes of the sample, thereby requiring different detecting methods and techniques. In other words, this invention relates to a technique of imaging the diffracted X-rays while paying attention being influenced by the fluorescent X-rays. Image information to be obtained is neither a chemical composition nor a distribution of the element, but is a distribution of the crystal structure.

The X-ray diffraction microscope apparatus in accordance with this invention corresponds to an X-ray diffraction microscope apparatus which measures and images diffracted X-rays generated at a specific position on a sample at a time when incident X-rays are irradiated to the sample. However, the X-ray diffraction microscope apparatus in accordance with this invention is provided with an X-ray generating apparatus for generating the incident X-rays, a sample stage for receiving the sample, a collimator serving as an angle divergence suppressing means of the diffracted X-rays, a two-dimensional X-ray detector having an energy resolving power for detecting the diffracted X-rays, an image processing apparatus, and an image recording and displaying apparatus. It is characterized by suppressing the angle divergence by moving the sample and the two-dimensional X-ray detector as close as possible via the collimator, and measuring and imaging the diffracted X-rays in a state in which both the two-dimensional X-ray detector and the sample stage are at a standstill without being moved.

Accordingly, it is possible to acquire the image in an extremely short time, it is possible to acquire information which can be acquired by a powder X-ray diffracting method such as crystal structure, texture, defect, strain, stress and the like, serving as data corresponding to the spacing of lattice planes of the sample as image information in correspondence to each point on the sample in a short time. Further, even in the case of an inhomogeneous sample, a material in which different crystal structures exist in one sample, or a sample in which textures having different orientations are contained, one of the differences can image the distribution of the structure showing the difference in structure on the basis of the place in the sample, and the other thereof can clarify the difference by separating the different structures in the case that the different structures are mixed, that is, can image individual structure information in place of average information.

In this case, the description "moving the sample and the two-dimensional X-ray detector as close as possible via the collimator" means to move the sample and the two-dimensional X-ray detector as close as possible via the collimator within a range where an optical path of the incident X-rays irradiated to the sample may not be blocked, and does not limit the particular numeric value of the distance between the sample and the two-dimensional X-ray detector (between the sample and the collimator in the case that the collimator is attached to the two-dimensional X-ray detector). In this case, for example, the distance between the sample and the collimator attached to the two-dimensional X-ray detector requires the same level of distance as the size of the incident beam on an upstream side in an incident direction of the incident X-rays to the sample, and can be set to about 0.3 mm to 1 mm, and can be close to a distance determined on the basis of the thicknesses of the collimator and the window of the CCD on the downstream side.

As is clarified in the prior invention relating to the imaging of the fluorescent X-rays proposed by the inventors of this application, the closer the distance is, the more both a spatial resolving power and an intensity observed in the detector are simultaneously improved. The spatial resolving power is absolutely the same in the case of the diffracted X-rays and the case of the fluorescent X-rays. However, with respect to the intensity, a dependency is different between the fluorescent X-rays and the diffracted X-rays, and the effect of moving the distance closer is greater in the fluorescent X-rays. Accordingly, when the fluorescent X-rays give an undesirable influence as a strong background, making the distance longer into consideration. In this case, an upper limit value is differentiated on the basis of the intensity of the observed diffracted X-rays. Accordingly, the upper limit varies case by case on the basis of an intensity of an X-ray source, a crystallinity of the sample, a remarked reflecting surface or the like. However, it can be typically set to a distance up to about 10 mm. In this case, it is possible to acquire an image in which a signal to background ratio is improved, while only slightly making a sacrifice in the spatial resolving power. In this case, the collimator is not necessarily incorporated in the two-dimensional X-ray detector. However, in order to make the distance closer, and save spare, it is desirable that the collimator is integrally attached to the two-dimensional X-ray detector, and it is desirable that the collimator is incorporated.

Further, with respect to the incident X-rays, since X-rays having a wavelength λ in correspondence to a different spacing d of lattice planes by using the continuous spectrum X-rays under a condition of a fixed angle in Bragg's equation 2dsinθ = λ, diffraction is generated in the different spacing of planes even at the same scattering angle if the X-rays having different energies are employed, it is possible to take a plurality of diffracted X-rays in the image by using white light, and it is possible to know a place dependency of each of the diffracted X-rays by analyzing the image. In other words, it is possible to simultaneously take a plurality of diffracted X-rays in one image by using the continuous X-rays as the incident X=rays, it is possible to simultaneously identify a plurality of structures, and it is possible to know the distribution thereof.

In this case, in order to prevent the influence of the fluorescent X-rays, it can be considered to remove the X-rays having a higher energy than those in an absorption end by a mirror or the like, to not use the X-rays having the higher energy generating the fluorescent X-rays by lowering a tube voltage in a laboratory system X-ray generating apparatus, to remove the X-rays by arranging a polymer thin film having a thickness of about 0.1 to 100 µm or the like saving as an absorber on a front side of the detector in the case that the energy of the fluorescent X=rays is lower than the energy of the diffracted X-rays, and to make the distance between the sample and the detector slightly apart so as to prevent the fluorescent X-rays from entering into the detector by paying attention to the difference between the fluorescent X-rays and the diffracted X-rays with respect to the distance between the sample and the detector. In this case, as is described later, in the case that it is possible to employ a single photon counting method, it is possible to identify the energy of the X-rays entering into the two-dimensional X-ray detector. Even if the fluorescent X-rays and the diffracted X-rays are physically generated from the same place, it is possible to separate and image the X-rays as far as the energies are independent. Accordingly, it is basically possible to acquire the image of the diffracted X-rays with no problem while avoiding the influence of the fluorescent X-rays, except for the place to which the significantly strong fluorescent X-rays give an adverse effect as the background.

Further, since the X-rays having the energy equal to or more than 13 keV transmit through the collimator incorporated in the two-dimensional X-ray detector, such as the CCD camera or the like, and it is difficult to image so as to form a corresponding relation between the sample and the CCD element surface, it is preferable to remove, it is desirable to use an apparatus for generating continuous X-rays which not include the high energy component equal to or higher than 13 keV as the X-ray generating apparatus, it is possible to improve the resolving power of X-ray diffraction by using the X-ray generating apparatus mentioned above, it is possible to remove the high energy component equal to or higher than 13 keV by using the high energy component removing optical system removing the high energy component equal to or higher than 13 keV in the incident X-rays close to the X-ray generating apparatus rather than the incident position of the incident X-rays to the sample, and it is possible to improve the resolving power of the X-ray diffraction.

In this case, since the two-dimensional X-ray detector is composed only by arranging the detecting elements, the two-dimensional X-ray detector can not differentiate the X-rays entering vertically and the X-rays flying from the side as it is, so that the image becomes indistinct and the position resolving power is lowered. However, since the collimator is provided in the inner portion of the two-dimensional X-ray detector, it is possible to limit the direction of the scattered X-rays entering into the detecting element, it is possible to detect only the diffracted X-rays at a target diffraction angle, and it is further possible to improve a position resolving power.

As the two-dimensional X-ray detector, it is possible to preferably use any of the CCD camera and the CMOS image sensor, which have the X-ray detecting capacity, and it is possible to obtain an improved image in correspondence to the specific spacing of lattice planes of the sample, by determining the energy of the diffracted X-rays on the basis of an electric charge amount generated in the CCD camera or the CMOS image sensor. In this case, in the CMOS image sensor, it is possible to consider a very similar method to the CCD camera, however, the CMOS image sensor is constituted by one-dimensional or two-dimensional array elements of different CMOS having a different image acquiring principle. The CMOS image sensor can read at a higher speed than the CCD, and if a lot of CMOS image sensors having a sensitivity of the X-rays are supplied in the future, it is expected that an application of this invention gives way to the CMOS image sensor from the CCD.

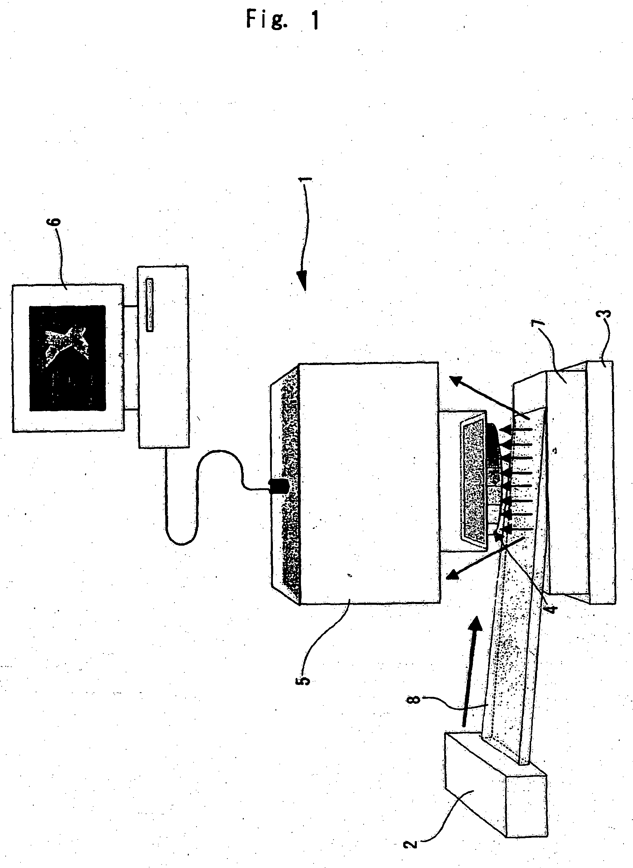

Fig. 1. shows a conceptual view of an X-ray diffraction microscope apparatus and an X-ray diffracting method in accordance with this invention. The X-ray diffraction microscope apparatus (1) is provided with an X-ray generating apparatus (2), a sample stage (3), a collimator (4), a two-dimensional X-ray detector (5), and a computer 6 serving as an image processing apparatus and an image recording and displaying apparatus. A sample (7) is arranged on the sample stage (3). In this case, the collimator (4) is attached to a side surface close to the sample in the two-dimensional X-ray detector (5).

In this example, the computer (6) is used as the image processing apparatus and the image recording and displaying apparatus. However, the image processing apparatus can be incorporated in a camera or the other elements by forming it as a microchip, and it is not limited to the image processing apparatus being necessarily formed integrally with the image recording and displaying apparatus. X-rays (8) having a continuous spectrum (typically between 4 to 13 keV) are generated from the X-ray generating apparatus (2), and the X-ray generating apparatus (2) can employ a sealed tube type X-ray generating apparatus on the market for diffracting the X-rays. In most cases, since a tube voltage of the sealed tube is at 20 kV or more, it is desirable to modify the sealed tube so as to be actuated at a lower tube voltage, and it is desirable that the X-ray generating apparatus employs an apparatus for generating the continuous X-rays which do not include the high energy component equal to or higher than 13 keV in the incident X-rays. Further, it is possible to utilize a light source of a continuous spectrum such as a synchrotron orbital radiation ray.

In the case where the incident X-rays include the high energy component, it is possible to remove them with a high energy component removing optical system. In order to remove the high energy X-rays, it is possible to utilize, for example, a quartz mirror coated with platinum or rhodium as the high energy component removing optical system, and it is particularly desirable to remove the high energy component equal to or higher than 13 keV. It is desirable that the sample stage (3) is provided with a manual or automatic position and inclination angle adjusting mechanism, and can select an observation visual field on the sample and adjust an angle for inputting the X-rays from an outer portion in the same manner as the normal optical microscope. The two-dimensional X-ray detector (5) and the collimator (4) have the same structure as those of the fluorescent X-ray microscope which the inventor of this application previously invented, and are structured such that the collimator is attached to the two-dimensional X-ray detector, the angle divergence of the diffracted X-rays is suppressed by using the collimator (4) and moving the sample (7) and the two-dimensional X-ray detector (5) as close as possible via the collimator (4) attached to the two-dimensional X-ray detector (5), and a one-to-one corresponding relation is formed between the sample (7) and the image.

The collimator (4) employs a structure formed by assembling synthetic quartz capillaries (capillary plates), and the collimator (4) can further preferably employ a structure in which the same process is applied to a light metal in accordance with a lithography technique.

The angle divergence can be suppressed to about r/d by setting an opening diameter of the capillary or the like to r and setting a thickness of the plate to d. If the sample surface and the collimator are moved close up to D a spatial resolving power becomes about rD/d. On the basis of this principle, the inventor of this application has succeeded in acquiring a fluorescent X-ray image having a spatial resolving power of 15 to 20 µm, and it is possible to apply this principle to this invention in the same manner.

Further, the two-dimensional X-ray detector (5) can preferably employ, for example, a semiconductor detector constituted by a lot of elements or a camera constituted by CCD elements in which a depleted layer is formed thicker for the X-rays. In the case in which the CCD camera is employed as the two-dimensional X-ray detector (5), the structure is made so as to directly detect without arranging any mechanism for converting the X-rays into light, such as a scintillator, and the electric charge amount generated when detecting one X=ray photon is differentiated on the basis of the energy of the X-rays is utilized for detecting the X-ray diffraction pattern. In other words, since the positional relationship between the sample and the two-dimensional X-ray detector is fixed, and the angle formed by the incident X-rays and the diffracted X-rays is about 91 degrees, only the X-rays having the energy determined to correspond to the specific spacing of lattice planes (2d value) generate Bragg reflection, and appear as a diffracted spot in the visual field of the detector.

Image processing referred to as a single photon counting method is used for detecting an extremely weak signal by the CCD camera in order to identify the energy of the diffracted spot. It is not necessary to accumulate the X-ray photon to a level by which a meaningful image is normally recognized if the imaging is performed for an extremely short time, and only as slight number of X-ray photons enter into any image of the CCD. Atthis time, on the basis of a brightness value which is actually imaged in each of pixels, it is differentiated whether the pixel exists In a region corresponding to the energy of the target diffracted X-rays (which is determined as 1), or not (which is determined as 0), whereby all the pixels are binarized. The microscope image corresponding to the specific spacing of lattice planes (2d value) can be obtained by performing the short-time imaging and the binarizing process many times and totally summing up. The microscope image group corresponding to the various spacing of lattice planes (2d value) can be obtained by simultaneously applying a plurality of references and simultaneously preparing a plurality of images when performing the binarizing determination. In order to acquire the image group, the short-time imaging, the reading from the CCD element and the imaging process are repeated many times. However, the time required therefor is, for example, 33 ms at maximum for one imaging, about thirty second if the process is repeated at 1024 times (corresponding to a 10 bit gradation image), and about two minutes if the process is repeated at 4096 times (corresponding to a 12 hit gradation image). Accordingly, it is possible to widely shorten the measuring time, which has been about one day to one week at minimum, by performing the X-ray diffraction measuring method without scanning by using the X-ray diffraction microscope apparatus in accordance with this invention.

Further, in the case of performing an integral calculation while paying attention to the specific position of the image, it is possible to discuss while making a difference in a color and a form on the sample in correspondence to the crystal structure. Alternatively, it goes without saying that it is possible to acquire data equivalent to the normal powder diffraction which has been conventionally performed by taking a simple summation of all the areas. Accordingly, this invention is considered to he a technique which is obtained by further developing the measuring method of the powder diffraction pattern in which the white X-rays and the semiconductor detector are combined. As mentioned above, this invention can not only achieve the imaging of the crystal structure of the inhomogeneous sample which has been difficult conventionally, in a short time, but also is compatible with the current measuring technique of the powder diffraction giving the average crystal structure information.

Examples will be shown below along with the accompanying drawings, and a description will be given in further detail of a mode for carrying out this invention. Ofcourse, it goes without saying that this invention is not limited to the following examples, and various aspects can be employed in detailed portions.

Examples

### Example 1 observation of powder diffraction spot from molybdenum plate

An observation of a powder diffraction spot from a molybdenum plate was performed by using the X-ray diffraction microscope apparatus (1) as shown in Fig. 1.

At this time, continuous X-rays of synchrotron radiation are used as the incident X-rays. The molybdenum has a structure of a body-centered cubic lattice. The X-ray energy and the like satisfying the Bragg reflection in the case of an angle of diffraction of 26,91 degrees (θ is 45.5 degrees), are shown as Table 1. In this case, a reflecting surface of the molybdenum employs surfaces (110), (200), (211), (220), (310), (222) and (321), and Table 1 also shows 2d values of the spacing of lattice planes and relative intensity ratios of the diffracted X-rays by the other reflecting surfaces on the assumption that an intensity of the diffracted X-rays by the reflecting surface (110) becomes 100.

**Table 1**

| Reflecting surface | 2d value (Å) | Relative intensity ratio | X-ray energy by which diffraction is generated by 45.5 degree incident (keV) |
|---|---|---|---|
| 110 | 4.450 | 100 | 3.90 |
| 200 | 3.148 | 16 | 5.52 |
| 211 | 2.596 | 31 | 6.69 |
| 220 | 2.226 | 9 | 7.83 |
| 310 | 1.991 | 14 | 8.73 |
| 222 | 1.817 | 3 | 14 |
| 321 | 1.682 | 24 | 10.33 |

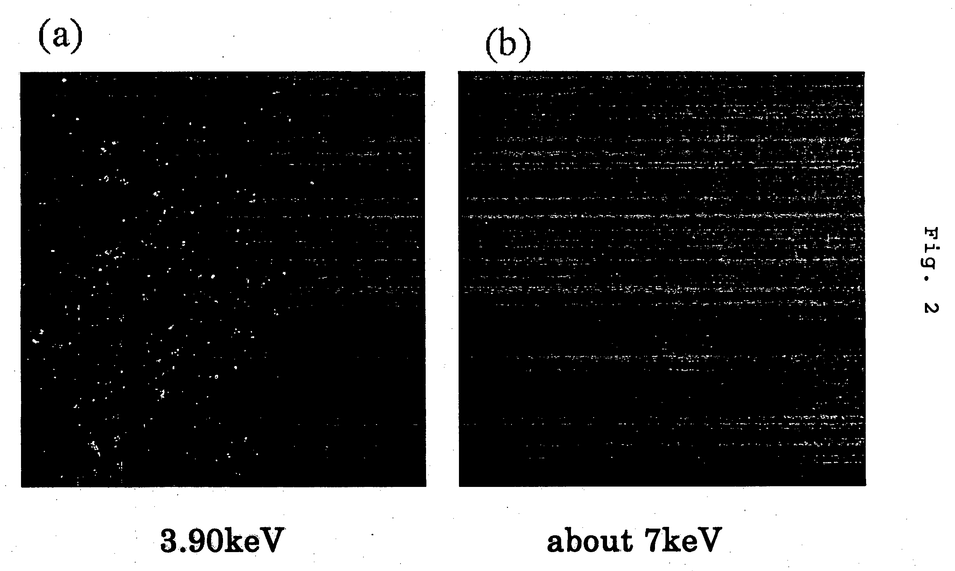

In this experiment, imaging at about 5 ms is repeated at 1024 times, the gradation level recorded in each of the pixels is read each time, and binarizing is performed on the basis of the determination whether or not the level exists in a certain determined range so as to perform a summation. The time required for measuring at that time is totally thirty second, including the image processing time. The results are shown in Fig. 2.

Fig. 2(a) shows an image obtained at a time when the determining condition is set to that gradation level corresponding to 3.9 keV, corresponds to the reflection of the reflecting surface (110), and a diffraction spot in which the spacing of lattice planes 2d value corresponds to 4.450 Å is obtained. On the contrary, Fig. 2(b) is an image obtained at a time when the determining condition is set to the gradation level corresponding to about 7 keV, and since the image does not satisfy the Bragg condition, the diffraction spot can not be obtained. As mentioned above, it is confirmed that the diffraction line from the sample is acquired as the microscope image in a short time.

### Example 2 The Observation of direction dependency of textures of aluminum foil

The textures of the aluminum foil were observed by using the X-ray diffraction microscope apparatus 1 as shown in Fig. 1 in the same manner as example 1. In the same manner, the continuous X-rays of the synchrotron radiation is used as the incident X-rays In the same manner. The aluminum has a structure of a face centered cubic lattice, and when the angle of diffraction is 2θ,91 degrees (θ = 45.5 degrees), the X-ray energy satisfying the Bragg reflection is as shown in Table 2. Further, the reflecting surface employs reflecting surfaces (111), (200), (220), (311), (222), (400), (331), (420) and (422), and Table 2 also shows also shows 2d values of the spacing of lattice planes and relative intensity ratios of the diffracted X-rays by the other reflecting surfaces on the assumption that an intensity of the diffracted X-rays by the reflecting surface (111) becomes **100.**

**Table 2**

| Reflecting surface | 2d value (Å) | Relative intensity ratio | X-ray energy by which diffraction is generated by 45.5 degree incident (keV) |
|---|---|---|---|
| 111 | 4.668 | 100 | 3.72 |
| 200 | 4.048 | 47 | 4.29 |
| 220 | 2.862 | 22 | 6.07 |
| 311 | 2.442 | 24 | 7.12 |
| 222 | 2.338 | 7 | 7.43 |
| 400 | 2.025 | 2 | 8.59 |
| 331 | 1.858 | 8 | 9.36 |
| 420 | 1.811 | 8 | 9.59 |
| 422 | 1.653 | 8 | 10.51 |

With respect to three reflections by the reflecting surfaces (220), (311) and (222), the image is acquired in the case that a relation between a rolling direction of the sample and the incident direction of the X-rays is set parallel and the case that it is set vertical, and a comparison between the images is performed. As a result, it is known that a lot of spots of the reflection by the reflecting surface (311) are observed only in the case where the X-rays are input so as to be orthogonal to the rolling direction. It is known that it is possible to acquire the image of the direction distribution in the manner mentioned above.

### Example 3 X-ray diffraction microscope image of hornblende gabbro

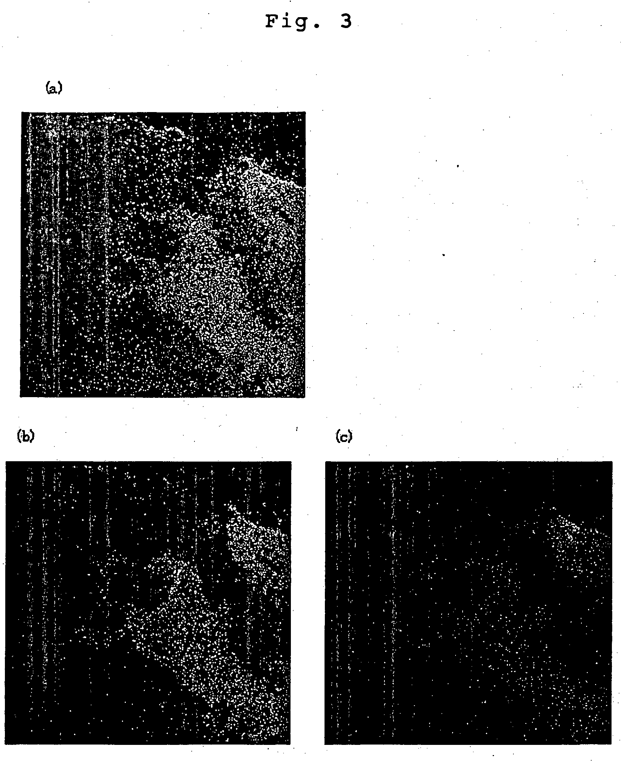

The diffraction spot from the hornblende gabbro was observed by using the white X-rays obtained by operating an X-ray source of a rotating anode (Mo target) at 13 kV and 600 mA. When first performing the normal imaging, the strong diffraction spots at two positions are observed in addition to an iron fluorescent X-ray contrast, as shown in Fig. 3(a). In order to separate and analyze this, the imaging having an exposure time of 5 seconds is performed repeatedly 128 times. At this time, the scattering angle is obtained by the formula 2θ = 91 degrees (θ = 45.5 degrees). Analyzing this result, the diffracted X-rays corresponding to (b) 4.7 keV and (c) 5.4 keV can be separated. It is considered that these correspond to the crystal lattice planes of the hornblende gabbro in which the spacing of lattice planes d is 1.841 A and 1.544 Å, respectively.

As described in detail above, in accordance with this invention, it is possible to provide an X-ray diffraction microscope apparatus which can acquire the image in an extremely short time, and can image the difference of an inhomogeneous sample, a material in which different crystal structures exist in one sample or a sample in which textures having a different direction are contained, and a X-ray diffraction measuring method using the X-ray diffraction microscope apparatus. Further, it is possible to promote discovery of a new material and a new substance by utilizing this invention, and it can be expected to stimulate economy.

## Claims

1. An X-ray diffraction microscope apparatus (1) for measuring and imaging diffraction X-rays generated at a specific position on a sample (7) when irradiating incident X-rays to the sample, the X-ray diffraction microscope apparatus comprising:
an X-ray generating apparatus (2) operable to generate incident X-rays (8);
a sample stage (3) on which the sample is placed;
a two-dimensional X-ray detector (5) having energy resolving power operable to detect diffracted X-rays from the sample (7);
a collimator (4) comprising a capillary plate, operable to suppress angle divergence of the diffracted X-rays;
an image processing apparatus (6) operable to perform image processing of signals detected by the two-dimensional X-ray detector (5) to acquire a microscope image; and
an image recording and displaying apparatus (6) for recording and displaying the microscope image acquired by said image processing apparatus (6);
**characterized in that** the sample and said two-dimensional X-ray detector are positioned as close as possible via said collimator so as to suppress the angle divergence of the diffracted X-rays from the sample, and the diffracted X-rays can be measured and imaged in a state in which the two-dimensional X-ray detector and the sample stage are at a standstill without being moved.

2. The X-ray diffraction microscope apparatus according to claim 1, wherein said X-ray generating apparatus is operable to generate continuous X-rays as the incident X-rays.

3. The X-ray diffraction microscope apparatus according to claim 2, wherein said X-ray generating apparatus comprises an apparatus for generating continuous X-rays which do not include a high energy component equal to or higher than 13 keV.

4. The X-ray diffraction microscope apparatus according to any one of claims 1 to 3, wherein a high energy component removing optical system for removing a high energy component equal to or higher than 13 keV in the incident X-rays is provided in a side of said X-ray generating apparatus.

5. The X-ray diffraction microscope apparatus according to any one of claims 1 to 4, wherein said collimator is attached to said two-dimensional X-ray detector.

6. The X-ray diffraction microscope apparatus according to any one of claims 1 to 5, wherein said two-dimensional X-ray detector comprises any one of a CCD camera and a CMOS image sensor.

7. The X-ray diffraction microscope apparatus according to claim 6, wherein said two-dimensional X-ray detector is operable to acquire an image corresponding to a specific spacing of lattice planes of the sample by determining the energy of the diffracted X-rays on the basis of an electric charge amount generated in said CCD camera or said CMOS image sensor.

8. An X-ray diffraction measuring method using an X-ray diffraction microscope apparatus for measuring and imaging diffraction X-rays generated at a specific position on a sample when irradiating incident X-rays to the sample, wherein the method uses said X-ray diffraction microscope apparatus comprising:
an X-ray generating apparatus operable to generate the incident X-rays;
a sample stage on which the sample is placed;
a two-dimensional X-ray detector having energy resolving power operable to detect diffracted X-rays from the sample;
a collimator comprising a capillary plate, operable to suppress angle divergence of the diffracted X-rays;
an image processing apparatus operable to perform image processing of the signals detected by said two-dimensional X-ray detector to acquire a microscope image; and
an image recording and displaying apparatus for recording and displaing the microscope image acquired by said image processor;
said method comprising suppressing an angle divergence of diffracted X-rays from the sample by positioning the sample and the two-dimensional X-ray detector as close as possible via the collimator; and measuring and imaging the diffracted X-rays in a state in which the two-dimensional X-ray detector and the sample stage are at a standstill without being moved.

9. The X-ray diffraction measuring method according to claim 8, wherein continuous X-rays are used as the incident X-rays.

10. The X-ray diffraction measuring method according to claim 8 or 9, wherein the X-ray generating apparatus employs an apparatus for generating continuous X-rays which do not include a high energy component equal to or higher than 13 keV for the incident X-rays.

11. The X-ray diffraction measuring method according to any one of claims 8 or 10, wherein a high energy component removing optical system for removing a high energy component equal to or higher than 13 keV in the incident X-rays is arranged in a side of the X-ray generating apparatus.

12. The X-ray diffraction measuring method according to any one of claims 8 to 11, wherein said collimator is attached to the two-dimensional X-ray detector.

13. The X-ray diffraction measuring method according to any one of claims 8 to 12, wherein the two-dimensional X-ray detector employs any of a CCD camera and a CMOS image sensor.

14. The X-ray diffraction measuring method according to claim 13, wherein an image corresponding to a specific spacing of lattice planes of the sample is acquired by determining the energy of the diffracted X-rays on the basis of an electric charge amount generated in the CCD camera or the CMOS image sensor.

## Patentansprüche

1. Ein Röntgen-Diffraktionsmikroskop-Gerät (1) zur Messung und Abbildung von Diffraktionsröntgenstrahlen, die auf einem Muster (7) in einer spezifischen Position generiert werden, wenn das Muster mit einfallenden Röntgenstrahlen bestrahlt wird, wobei das Röntgen-Diffraktionsmikroskop-Gerät folgendes umfasst:
- Röntgenstrahlen erzeugendes Gerät (2), der betriebsbereit ist, um einfallende Röntgenstrahlen (8) zu generieren;
- eine Musterbühne (3), auf die das Muster platziert wird;
- einen zweidimensionalen Röntgenstrahlen-Detektor (5) mit einem Energieauflösungsvermögen, der betriebsbereit ist, um gebeugte Röntgenstrahlen aus dem Muster (7) zu erfassen;
- einen Kollimator (4) mit einer Kapillarplatte, der betriebsbereit ist, um Abweichungswinkel der gebeugten Röntgenstrahlen zu eliminieren;
- ein Bildbearbeitungsgerät (6), das betriebsbereit zur Bildverarbeitung von Signalen ist, die vom zweidimensionalen Röntgenstrahlen-Detektor (5) erfasst wurden, um ein Mikroskopbild zu akquirieren; und
- ein Bildspeicher- und Bildanzeigegerät (6) zum Speichern und zur Anzeige des durch besagtes Bildbearbeitungsgerät (6) akquirierten Bildes;
**dadurch gekennzeichnet, dass** das Muster und der besagte zweidimensionale Röntgenstrahlen-Detektor über den besagten Kollimator so nahe aneinander wie möglich positioniert sind, derart, um den Abweichungswinkel der gebeugten Röntgenstrahlen aus dem Muster zu eliminieren, damit die gebeugten Röntgenstrahlen gemessen und in einem Zustand abgebildet werden können, in dem der zweidimensionale Röntgenstrahlen-Detektor und die Musterbühne stillstehen und nicht bewegt werden.

2. Das Röntgen-Diffraktionsmikroskop-Gerät gemäß Anspruch 1, wobei das besagte Röntgen-Diffraktionsmikroskop-Gerät betriebsbereit ist, um kontinuierliche Röntgenstrahlen wie die einfallenden Röntgenstrahlen zu generieren.

3. Das Röntgen-Diffraktionsmikroskop-Gerät gemäß Anspruch 2, wobei das besagte Röntgen-Diffraktionsmikroskop-Gerät ein Gerät zur Generation von kontinuierlichen Röntgenstrahlen umfasst, die keine höhere Energiekomponente beinhalten, die gleich oder höher als 13 keV ist.

4. Das Röntgen-Diffraktionsmikroskop-Gerät gemäß einem der Ansprüche 1 bis 3, wobei ein optisches System zur Entfernung von hohen Energiekomponenten, die gleich oder höher als 13 KeV in den einfallenden Röntgenstrahlen sind, auf einer Seite des besagten Geräts zur Erzeugung von Röntgenstrahlen bereitgestellt wird.

5. Das Röntgen-Diffraktionsmikroskop-Gerät gemäß einem der Ansprüche 1 bis 4, wobei besagter Kollimator am besagten zweidimensionalen Röntgenstrahlen-Detektor befestigt ist.

6. Das Röntgen-Diffraktionsmikroskop-Gerät gemäß einem der Ansprüche 1 bis 5, wobei besagter zweidimensionale Röntgenstrahlen-Detektor eine beliebige CCD-Kamera und einen CMOS-Bildsensor umfasst.

7. Das Röntgen-Diffraktionsmikroskop-Gerät gemäß Anspruch 6, wobei besagter zweidimensionale Röntgenstrahlen-Detektor betriebsbereit ist, um ein Bild zu akquirieren, das spezifischen Gitterabstandsebenen des Musters entspricht, in dem die Energie der gebeugten Röntgenstrahlen auf der Grundlage von einer in besagter CCD-Kamera oder besagtem CMOS-Bildsensor generierten elektrischen Last determiniert wird.

8. Ein Röntgenstrahlen-Diffraktionsmessverfahren, das ein Röntgen-Diffraktionsmikroskop-Gerät zur Messung und Abbildung von Diffraktionsröntgenstrahlen verwendet, die auf einem Muster in einer spezifischen Position generiert werden, wenn das Muster mit einfallenden Röntgenstrahlen bestrahlt wird, wobei das Verfahren das besagte Röntgen-Diffraktionsmikroskop-Gerät verwendet, welches folgendes umfasst:
- Röntgenstrahlen erzeugendes Gerät, das betriebsbereit ist, um einfallende Röntgenstrahlen zu generieren;
- eine Musterbühne, auf die das Muster platziert wird;
- einen zweidimensionalen Röntgenstrahlen-Detektor mit einem Energieauflösungsvermögen, der betriebsbereit ist, um gebeugte Röntgenstrahlen aus dem Muster zu erfassen;
- einen Kollimator mit einer Kapillarplatte, betriebsbereit um Abweichungswinkel der gebeugten Röntgenstrahlen zu eliminieren;
- ein Bildbearbeitungsgerät, das betriebsbereit zur Bildverarbeitung der Signale ist, die vom zweidimensionalen Röntgenstrahlen-Detektor erfasst wurden, um ein Mikroskopbild zu akquirieren; und
- ein Bildspeicher- und Bildanzeigegerät zum Speichern und zur Anzeige des durch besagtes Bildbearbeitungsgerät akquirierten Bildes;
wobei besagtes Verfahren die Eliminierung eines Abweichungswinkels der gebeugten Röntgenstrahlen aus dem Muster, indem das Muster und der zweidimensionale Röntgenstrahlen-Detektor über den Kollimator so nahe aneinander wie möglich positioniert sind, sowie die Messung und Abbildung der gebeugten Röntgenstrahlen in einem Zustand umfasst, in dem der zweidimensionale Röntgenstrahlen-Detektor und die Musterbühne stillstehen und nicht bewegt werden.

9. Das Röntgenstrahlen-Diffraktionsmessverfahren gemäß Anspruch 8, wobei kontinuierliche Röntgenstrahlen verwendet werden wie die einfallenden Röntgenstrahlen.

10. Das Röntgenstrahlen-Diffraktionsmessverfahren gemäß Anspruch 8 oder 9, wobei das Gerät zur Generation von Röntgenstrahlen ein Gerät zur Generation von kontinuierlichen Röntgenstrahlen umfasst, die keine höhere Energiekomponente beinhalten, die gleich oder höher als 13 keV für die einfallenden Röntgenstrahlen ist.

11. Das Röntgenstrahlen-Diffraktionsmessverfahren gemäß einem der Ansprüche 8 oder 10, wobei ein optisches System zur Entfernung von hohen Energiekomponenten, die gleich oder höher als 13 KeV in den einfallenden Röntgenstrahlen sind, auf einer Seite des Geräts zur Erzeugung von Röntgenstrahlen bereitgestellt wird.

12. Das Röntgenstrahlen-Diffraktionsmessverfahren gemäß einem der Ansprüche 8 bis 11, wobei besagter Kollimator am zweidimensionalen Röntgenstrahlen-Detektor befestigt ist.

13. Das Röntgenstrahlen-Diffraktionsmessverfahren gemäß einem der Ansprüche 8 bis 12, wobei besagter zweidimensionale Röntgenstrahlen-Detektor eine beliebige CCD-Kamera und einen CMOS-Bildsensor verwendet.

14. Das Röntgenstrahlen-Diffraktionsmessverfahren gemäß Anspruch 13, wobei ein Bild akquiriert wird, das spezifischen Gitterabstandsebenen des Musters entspricht, in dem die Energie der gebeugten Röntgenstrahlen auf der Grundlage von einer in besagter CCD-Kamera oder besagtem CMOS-Bildsensor generierten elektrischen Last determiniert wird.

## Revendications

1. Appareil formant microscope à diffraction de rayons X (1) pour la mesure et l'imagerie de rayons X à diffraction produits à une position spécifique sur un échantillon (7) en irradiant des rayons X incidents sur l'échantillon, l'appareil formant microscope à diffraction de rayons X comprenant :
un appareil de production de rayons X (2) pouvant être mis en oeuvre pour produire des rayons X incidents (8) ;
une platine d'échantillon (3) sur laquelle l'échantillon est placé ;
un détecteur de rayons X bidimensionnel (5) ayant un pouvoir séparateur d'énergie, pouvant être mis en oeuvre pour détecter des rayons X diffractés provenant de l'échantillon (7) ;
un collimateur (4) comprenant une plaque capillaire, pouvant être mis en oeuvre pour supprimer la divergence angulaire des rayons X diffractés ;
un appareil de traitement d'image (6) pouvant être mis en oeuvre pour effectuer un traitement d'image de signaux détectés par le détecteur de rayons X bidimensionnel (5) pour acquérir une image par microscope ; et
un appareil d'enregistrement et d'affichage d'image (6) pour enregistrer et afficher l'image par microscope acquise par ledit appareil de traitement d'image (6) ;
**caractérisé en ce que** l'échantillon et ledit détecteur de rayons X bidimensionnel sont positionnés aussi proches que possible via ledit collimateur afin de supprimer la divergence angulaire des rayons X diffractés provenant de l'échantillon, et les rayons X diffractés peuvent être mesurés et imagés dans un état dans lequel le détecteur de rayons X bidimensionnel et la platine d'échantillon sont au niveau d'un point mort sans déplacement.

2. Appareil formant microscope à diffraction de rayons X selon la revendication 1, dans lequel ledit appareil de production de rayons X peut être mis en oeuvre pour produire des rayons X continus en tant que rayons X incidents.

3. Appareil formant microscope à diffraction de rayons X selon la revendication 2, dans lequel ledit appareil de production de rayons X comprend un appareil pour produire des rayons X continus qui n'incluent pas de composante à haute énergie égale ou supérieure à 13 keV.

4. Appareil formant microscope à diffraction de rayons X selon l'une quelconque des revendications 1 à 3, dans lequel un système optique d'enlèvement de composante à haute énergie pour enlever une composante à haute énergie égale ou supérieure à 13 keV est prévu dans un côté dudit appareil de production de rayons X.

5. Appareil formant microscope à diffraction de rayons X selon l'une quelconque des revendications 1 à 4, dans lequel ledit collimateur est attaché audit détecteur de rayons X bidimensionnel.

6. Appareil formant microscope à diffraction de rayons X selon l'une quelconque des revendications 1 à 5, dans lequel ledit détecteur de rayons X bidimensionnel comprend n'importe lequel d'un appareil de prise de vues à CCD et d'un capteur d'image CMOS.

7. Appareil formant microscope à diffraction de rayons X selon la revendication 6, dans lequel ledit détecteur de rayons X bidimensionnel peut être mis en oeuvre pour acquérir une image correspondant à un espacement spécifique des plans de réseau cristallin de l'échantillon en déterminant l'énergie des rayons X diffractés sur la base d'une quantité de charges électriques produites dans ledit appareil de prise de vues à CCD ou ledit capteur d'image CMOS.

8. Procédé de mesure de diffraction de rayons X utilisant un appareil formant microscope à diffraction de rayons X pour la mesure et l'imagerie de rayons X à diffraction produits à une position spécifique sur un échantillon en irradiant des rayons X incidents sur l'échantillon, dans lequel le procédé utilise ledit appareil formant microscope à diffraction de rayons X comprenant :
un appareil de production de rayons X pouvant être mis en oeuvre pour produire les rayons X incidents ;
une platine d'échantillon sur laquelle l'échantillon est placé ;
un détecteur de rayons X bidimensionnel ayant un pouvoir séparateur d'énergie, pouvant être mis en oeuvre pour détecter des rayons X diffractés provenant de l'échantillon ;
un collimateur comprenant une plaque capillaire, pouvant être mis en oeuvre pour supprimer la divergence angulaire des rayons X diffractés ;
un appareil de traitement d'image pouvant être mis en oeuvre pour effectuer un traitement d'image des signaux détectés par ledit détecteur de rayons X bidimensionnel pour acquérir une image par microscope ; et
un appareil d'enregistrement et d'affichage d'image pour enregistrer et afficher l'image par microscope acquise par ledit processeur d'image ;
ledit procédé comprenant la suppression d'une divergence angulaire de rayons X diffractés provenant de l'échantillon en positionnant l'échantillon et le détecteur de rayons X bidimensionnel aussi proches que possible via le collimateur ; et la mesure et l'imagerie des rayons X diffractés dans un état dans lequel le détecteur de rayons X bidimensionnel et la platine d'échantillon sont au niveau d'un point mort sans déplacement.

9. Procédé de mesure de diffraction de rayons X selon la revendication 8, dans lequel des rayons X continus sont utilisés en tant que rayons X incidents.

10. Procédé de mesure de diffraction de rayons X selon la revendication 8 ou 9, dans lequel l'appareil de production de rayons X utilise un appareil pour produire des rayons X continus qui n'incluent pas de composante à haute énergie égale ou supérieure à 13 keV pour les rayons X incidents.

11. Procédé de mesure de diffraction de rayons X selon l'une quelconque des revendications 8 ou 10, dans lequel un système optique d'enlèvement de composante à haute énergie pour enlever une composante à haute énergie égale ou supérieure à 13 keV dans les rayons X incidents est agencé dans un côté de l'appareil de production de rayons X.

12. Procédé de mesure de diffraction de rayons X selon l'une quelconque des revendications 8 à 11, dans lequel ledit collimateur est attaché au détecteur de rayons X bidimensionnel.

13. Procédé de mesure de diffraction de rayons X selon l'une quelconque des revendications 8 à 12, dans lequel le détecteur de rayons X bidimensionnel utilise n'importe lequel d'un appareil de prise de vues à CCD et d'un capteur d'image CMOS.

14. Procédé de mesure de diffraction de rayons X selon la revendication 13, dans lequel une image correspondant à un espacement spécifique de plans de réseau cristallin de l'échantillon est acquise en déterminant l'énergie des rayons X diffractés sur la base d'une quantité de charges électriques produites dans l'appareil de prise de vues à CCD ou le capteur d'image CMOS.
